# DEMANDE DE BREVET EUROPEEN

(11) **EP 0 543 710 A1**
(43) Date de publication de la demande: **26.05.1993**
(21) Numéro de dépôt: 92403069.5
(22) Date de dépôt: 13.11.1992
(51) Int. Cl.: F01N 3/28

(54) **Structure de support d'au moins un matériau de catalyse des gaz d'échappement d'un moteur notamment de véhicule automobile**

(30) Priorité: 19.11.1991 FR 9114247
(71) Demandeur: ECIA - EQUIPEMENTS ET COMPOSANTS POUR L'INDUSTRIE AUTOMOBILE, F-25400 Audincourt (FR)
(72) Inventeur: Lagier, Jean, F-25750 Arcey (FR)
(74) Mandataire: Habasque, Etienne Joel Jean-François

(57) **Abrégé**

Cette structure de support d'au moins un matériau de catalyse des gaz d'échappement d'un moteur notamment de véhicule automobile, est caractérisée en ce qu'elle comporte au moins une couche (1) de fils métalliques entrelacés revêtus dudit au moins un matériau de catalyse et fixée sur une plaque de support (2).

## Description

La présente invention concerne une structure de support d'au moins un matériau de catalyse des gaz d'échappement d'un moteur notamment de véhicule automobile.

On connaît déjà dans l'état de la technique un certain nombre de structures de support de ce type.

C'est ainsi par exemple qu'on connaît des structures en céramique présentant des canaux longitudinaux et dont les surfaces sont revêtues de matériau de catalyse.

On connaît également des structures de support qui sont réalisées à l'aide de plaques métalliques minces dont l'une présente des ondulations, délimitant également des canaux longitudinaux et dont les surfaces sont revêtues de matériau de catalyse.

Ces structures sont disposées dans la ligne d'échappement d'un moteur de véhicule automobile et les gaz d'échappement de celui-ci passent à travers les canaux de la structure ce qui provoque la catalyse et donc la dépollution de ces gaz.

Cependant les structures de l'état de la technique présentent un certain nombre d'inconvénients car elles sont relativement fragiles, d'un prix de revient et d'un encombrement relativement importants.

En effet, pour que l'efficacité de ces structures soit la plus élevée possible, il est souhaitable que les gaz d'échappement s'écoulent de manière tourbillonnaire dans les canaux ce qui permet une réduction de la surface utile de ces structures et donc de leur encombrement.

Or, les structures à canaux de l'état de la technique forcent les gaz d'échappement à passer d'un écoulement tourbillonnaire à un écoulement laminaire, ce qui réduit leur efficacité et oblige à augmenter leur surface utile et donc leur encombrement.

Pour remédier à ces inconvénients, on a proposé dans l'état de la technique d'utiliser des structures de support comportant au moins une couche de fils métalliques entrelacés revêtus dudit au moins un matériau de catalyse, et à travers laquelle s'écoulent les gaz.

On trouvera des exemples de telles structures dans les documents FR-A-2 479 323, DE-U-8 710 710, US-A-3 495 950 et JP-A-63 315 152.

Les structures décrites dans ces différents documents comprennent en effet au moins une couche de fils métalliques entrelacés et par exemple enroulée sous forme d'une bobine, le gaz s'écoulant radialement dans celle-ci.

Ces structures présentent une meilleure efficacité que les structures classiques à canaux tout en étant moins coûteuses.

Cependant, des essais ont montré que ces structures se dégradaient très rapidement.

On conçoit en effet que ces structures sont portées à des températures relativement élevées et sont soumises à des sollicitations extrêmement importantes et variables du fait des modifications de charge du moteur.

Le but de l'invention est donc de résoudre ces problèmes en proposant une structure de support qui soit simple, fiable, d'un prix de revient peu élevé et d'un encombrement réduit tout en présentant une efficacité au moins aussi importante que celle des structures de l'état de la technique.

A cet effet l'invention a pour objet une structure de support d'au moins un matériau de catalyse des gaz d'échappement d'un moteur notamment de véhicule automobile, caractérisée en ce qu'elle comporte au moins une couche de fils métalliques entrelacés revêtus dudit au moins un matériau de catalyse et fixée sur une plaque de support.

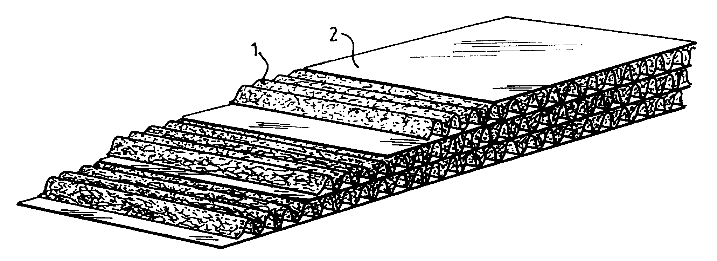

L'invention sera mieux comprise à l'aide de la description qui va suivre donnée uniquement à titre d'exemple et faite en référence au dessin annexé qui représente une vue schématique d'une structure de support selon l'invention.

Ainsi qu'on peut le voir sur cette figure, une structure de support d'au moins un matériau de catalyse des gaz d'échappement d'un moteur notamment de véhicule automobile, selon l'invention, comporte au moins une couche de fils métalliques entrelacés, désignée par la référence générale 1. Ces fils sont revêtus du matériau de catalyse de manière classique et peuvent par exemple être tressés.

Cette couche est fixée par exemple par soudage sur une plaque de support 2 constituée par exemple par une plaque de matériau métallique et celle-ci peut être plane. Dans ce cas la structure de support comporte plusieurs couches de fils et plusieurs plaques superposées. Cependant, la couche de fils peut également être fixée sur une plaque unique et celles-ci peuvent être enroulées sur elles-même pour former une bobine.

On conçoit donc que cette couche de fils métalliques entrelacés permet de maintenir un écoulement tourbillonnaire des gaz à l'intérieur de la structure, ce qui permet d'améliorer son efficacité et de réduire ses dimensions.

Par ailleurs, la réalisation de cette couche de fils métalliques entrelacés est beaucoup moins onéreuse que la fabrication d'une structure en céramique ou d'une structure métallique à canaux classique et la plaque de support permet d'améliorer la rigidité et la résistance mécanique de cette structure.

Bien entendu, cette structure peut être disposée en un emplacement quelconque de la ligne d'échappement du moteur.

Enfin, la couche de fils peut être fixée par tous autres moyens appropriés sur la plaque.

## Revendications

1. Structure de support d'au moins un matériau de catalyse des gaz d'échappement d'un moteur notamment de véhicule automobile, caractérisée en ce qu'elle comporte au moins une couche (1) de fils métalliques entrelacés revêtus dudit au moins un matériau de catalyse et fixée sur une plaque de support (2).

2. Structure de support selon la revendication 1, caractérisée en ce que les fils sont tressés.

3. Structure de support selon la revendication 1 ou 2, caractérisée en ce que la plaque de support (2) est plane et en ce que la structure de support comporte plusieurs couches de fils métalliques entrelacés et plusieurs plaques superposées.

4. Structure de support selon la revendication 1 ou 2, caractérisée en ce que la plaque et la couche de fils métalliques entrelacés sont enroulées sur elles-même pour former une bobine.
